# EUROPÄISCHE PATENTSCHRIFT

(11) **EP 0 603 684 B1**
(45) Veröffentlichungstag und Bekanntmachung des Hinweises auf die Patenterteilung: **08.04.1998**
(21) Anmeldenummer: 93119993.9
(22) Anmeldetag: 10.12.1993
(51) Int. Cl.: C05F 3/00

(54) **Verfahren zur Behandlung von Gülle**
Process for treating liquid manure
Procédé de traitement de lisier

(30) Priorität: 23.12.1992 DE 4243918
(43) Veröffentlichungstag der Anmeldung: 29.06.1994
(73) Patentinhaber: GEA Wiegand GmbH, D-76275 Ettlingen (DE)
(72) Erfinder: Arzt, Bernhard, Dr.-Ing., D-76870 Kandel (DE); Schormüller, Matthias, Dipl.-Ing., D-76137 Karlsruhe (DE)
(74) Vertreter: Weiss, Wolfgang, Dipl.-Chem. Dr.

(56) Entgegenhaltungen:
- DE-A- 4 114 667
- FR-A- 2 260 549
- FR-A- 2 666 330
- GB-A- 2 066 231

## Beschreibung

Die Erfindung betrifft ein Verfahren zur Behandlung von Gülle.

Die GB-A-2 066 231 betrifft ein Verfahren zur Behandlung von Gülle, wobei fermentierte Gülle in einer Kolonne weitgehend von ammoniakhaltigen Bestandteilen und Kohlendioxid befreit wird, welche Produkte dann evtl. zu Ammoniumcarbonat Weiterverarbeitet werden können.

Aufgabe der Erfindung ist es, ein Verfahren dieser Art anzugeben, das die besonderes wirtschaftliche Gewinnung von Ammoniumsalzen gestattet.

Zur Lösung dieser Aufgabe ist das erfindungsgemäße Verfahren geeignet, welcher Gegenstand des unabhängigen Anspruchs 1 ist; bevorzugte Ausführungen sind Gegenstand der abhängigen Ansprüche 2 bis 11.

Besonders wirtschaftlich wird das Verfahren, weil mit dem von festen Ammoniumsalzen im wesentlichen befreiten, in dem Fest-Flüssig-Trennapparat anfallenden Kondensat der Mischkondensator gespeist wird und/oder daß mit einem Anteil des aus dem Mischkondensator austretenden Kondensat die Kolonne gespeist wird.

Um eine Wärmeabfuhr zu bewirken, die zum Betrieb der Rektifizierkolonne erforderlich ist, ist das Verfahren bevorzugt dadurch gekennzeichnet, daß das Kondensat auf seinem Weg vom Mischkondensator zum Fest-Flüssig-Trennapparat zur Ausfällung von Ammoniumsalzen bis zu einer unter der Sättigungstemperatur des Kondensats liegenden Temperatur gekühlt wird.

Um die Wärmeabfuhr aus der Kolonne unabhängig von der Bildung der Ammoniumsalze steuern zu können, ist das Verfahren bevorzugt dadurch gekennzeichnet, daß aus dem Mischkondensator austretendes Kondensat bis zu einer über der Sättigungstemperatur des Kondensats liegenden Temperatur gekühlt wird und dann zur Ausfällung von Ammoniumsalzen in einem Kristaller bis zu einer unter der Sättigungstemperatur des Kondensats liegenden Temperatur gekühlt wird, bevor es in den Fest-Flüssig-Trennapparat gelangt. Dieses Verfahren ist besonders wirtschaftlich, wenn mit einem Anteil des bis über seine Sättigungstemperatur gekühlten Kondensats der Mischkondensator gespeist wird und/oder wenn mit dem im Kristaller anfallenden, von Ammoniumsalzen weitgehend befreiten Kondensat der Mischkondensator gespeist wird. Die Fest-Flüssig-Trennung kann besonders wirtschaftlich in einer Kombination aus Zyklon und/oder Zentrifuge durchgeführt werden.

Als Zentrifuge wird bevorzugt eine Schubzentrifuge verwendet, da eine solche Zentrifuge nicht verkrustet.

Aus dem gleichen Grunde wird zur Kühlung des aus dem Mischkondensator austretenden Kondensats bevorzugt ein Wirbelschicht-Wärmeübertrager verwendet.

Zur zusätzlichen Gewinnung von Düngemittel ist das Verfahren bevorzugt dadurch gekennzeichnet, daß die in der Kolonne anfallende, von ammoniakhaltigen Bestandteilen weitgehend befreite Gülle eingedampft und getrocknet wird.

Um überdies Methan gewinnen zu können, ist das Verfahren bevorzugt dadurch gekennzeichnet, daß die Gülle vor ihrer Zuführung zur Kolonne in wenigstens einer Stufe unter Abführung von Methan fermentiert wird.

Die Erfindung wird im folgenden an einem Ausführungsbeispiel unter Hinweis auf die beigefügten Zeichnungen beschrieben.
- Fig. 1: zeigt eine erste Anlage zur Durchführung des Verfahrens.
- Fig. 2: zeigt eine zweite Anlage zur Durchführung des Verfahrens.

Gleiche Bezugsziffern bezeichnen gleiche oder im wesentlichen gleiche Teile.

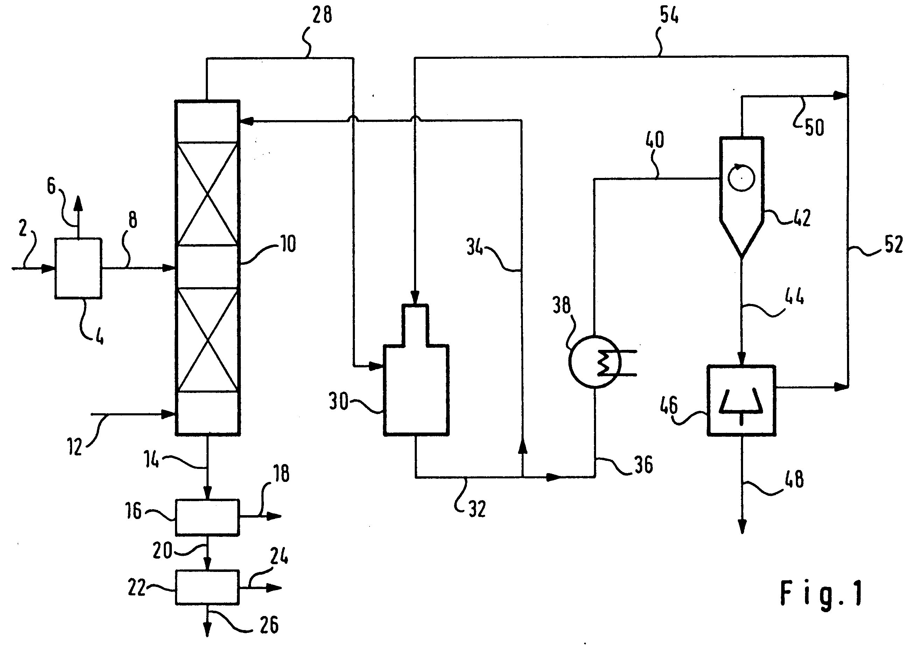

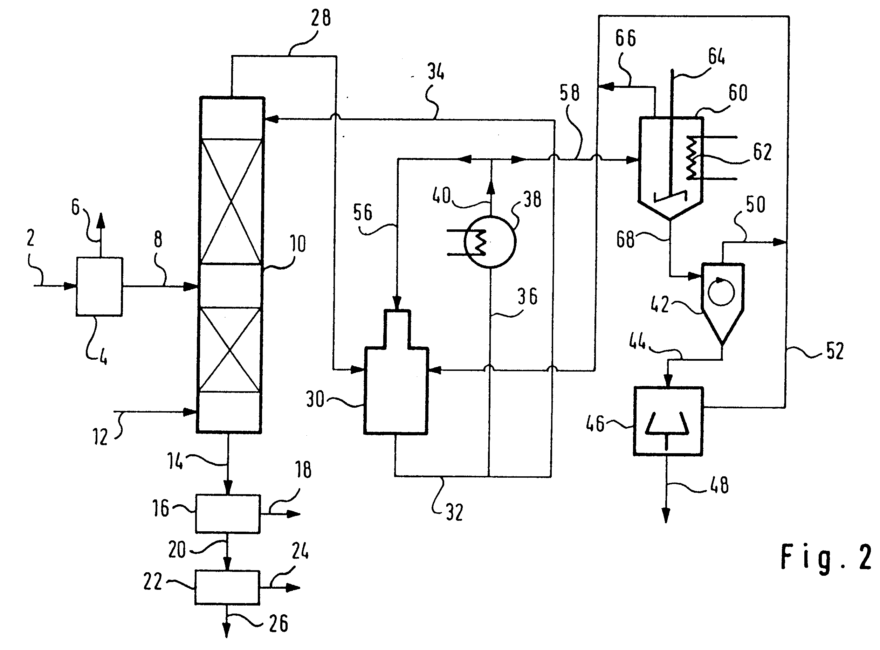

Das Verfahren wird soweit es in Zusammenhang mit Fig. 1 beschrieben ist, in Zusammenhang mit Fig. 2 nicht erneut beschrieben.

Gülle wird durch eine Leitung 2 einer Fermentationsstufe 4 zugeführt, aus der durch eine Leitung 6 Abgas austritt. Die fermentierte Gülle gelangt aus der Fermentationsstufe 4 durch eine Leitung 8 in eine Rektifizierkolonne 10, der von unten durch eine Leitung 12 Frischdampf zugeführt wird.

Aus der Rektifizierkolonne 10 fließt von unten von Ammonium weitgehend befreite Gülle durch eine Leitung 14 in einen Eindampfer 16, aus dem durch eine Leitung 18 fast reines Wasser und durch eine Leitung 20 ein Konzentrat austritt. Das Konzentrataus der Leitung 20 gelangt in einen Trockner 22, aus dem fast reines Wasser durch eine Leitung 24 abgeführt wird und aus dem durch eine Leitung 26 im wesentlichen getrocknetes Düngemittel austritt.

Aus der Rektifizierkolonne wird oben durch eine Leitung 28 Ammoniumverbindungen enthaltender Dampf und CO₂ abgeführt und dem Mischkondensator 30 zugeführt. Durch die Kondensation entstehen im Kondensat des Mischkondensators Ammoniumsalze, die zusammen mit dem Restkondensat unten aus dem Mischkondensator 30 durch eine Leitung 32 abgeführt werden. Ein Anteil von diesen wird über eine Leitung 34 der Rektifizierkolonne 10 oben zugeführt. Der Rest gelangt durch eine Leitung 36 in einen Wirbelschicht-Wärmeübertrager 38 und von dort durch eine Leitung 40 in einen Zyklon 42. Aus dem Zyklon 42 strömt hochgradig Ammoniumsalz enthaltende Flüssigkeit durch eine Leitung 44 in eine Schubzentrifuge 46, aus der durch eine Leitung 48 nur noch wenig Flüssigkeit enthaltendes Ammoniumsalz austritt.

Der Zyklon 42 allein würde das Ammoniumsalz nicht genügend trocknen. Die Schubzentrifuge 46 allein fordert, um mit angemessenem Wirkungsgrad zu arbeiten, einen Mindestsalzgehalt, der von dem Zyklon 42 über die Leitung 44 zu liefern ist.

Aus dem Zyklon austretende Flüssigkeit wird über eine Leitung 50 und aus der Schubzentrifuge 46 austretende Flüssigkeit wird über eine Leitung 52 jeweils über eine Leitung 54 dem Mischkondensator 30 von oben zugeführt.

Die Anlage nach Fig. 2 unterscheidet sich von der Anlage nach Fig. 1 dahingehend, daß die Mischung aus Salz und Flüssigkeit, die aus dem Wirbelschicht-Wäremübertrager 38 austritt, zu einem Teil einer Leitung 56 zur Speisung des Mischkondensators 30 und zum Rest durch eine Leitung 58 einem Kristaller 60 zugeführt wird, der einen Kühler 62 und ein Rührwerk 64 aufweist. Aus dem Kristaller 60 wird von Salzen im wesentlichen befreite Flüssigkeit über eine Leitung 66 zwecks Aufkonzentrierung der Leitung 52 und Salzbrei über eine Leitung 68 dem Zyklon 42 zugeführt.

## Patentansprüche

1. Verfahren zur Behandlung von Gülle, wobei fermentierte Gülle in einer Kolonne (10) weitgehend von ammoniakhaltigen Bestandteilen und CO₂ befreit wird, und Ammoniumsalze gewonnen werden,
**dadurch gekennzeichnet,**
daß aus der Kolonne (10) austretender, ammoniakhaltige Bestandteile und CO₂ enthaltender Wasserdampf in einem Mischkondensator (30) unter Bildung von Ammoniumsalzen im Kondensat kondensiert wird und dann die Ammoniumsalze aus dem Kondensat in einem Fest-Flüssig-Trennapparat abgetrennt werden, und daß mit einem Anteil des aus dem Mischkondensator (30) austretenden Kondensats die Kolonne (10) gespeist wird.

2. Verfahren nach Anspruch 1,
**dadurch gekennzeichnet,**
daß mit dem von festen Ammoniumsalzen im wesentlichen befreiten, in dem Fest-Flüssig-Trennapparat anfallenden Kondensat der Mischkondensator (30) gespeist wird.

3. Verfahren nach Anspruch 1 oder 2,
**dadurch gekennzeichnet,**
daß das Kondensat auf seinem Weg vom Mischkondensator (30) zum Fest-Flüssig-Trennapparat zur Ausfällung von Ammoniumsalzen bis zu einer unter der Sättigungstemperatur des Kondensats liegenden Temperatur gekühlt wird.

4. Verfahren nach Anspruch 1 oder 2,
**dadurch gekennzeichnet,**
daß aus dem Mischkondensator (30) austretendes Kondensat bis zu einer über der Sättigungstemperatur des Kondensats liegenden Temperatur gekühlt wird und dann zur Ausfällung von Ammoniumsalzen in einem Kristaller (60) bis zu einer unter der Sättigungstemperatur des Kondensats liegenden Temperatur gekühlt wird, bevor es in den Fest-Flüssig-Trennapparat gelangt.

5. Verfahren nach Anspruch 4,
**dadurch gekennzeichnet,**
daß mit einem Anteil des bis über seine Sättigungstemperatur gekühlten Kondensats der Mischkondensator (30) gespeist wird.

6. Verfahren nach Anspruch 4 oder 5,
**dadurch gekennzeichnet,**
daß mit dem im Kristaller (60) anfallenden, von Ammoniumsalzen weitgehend befreiten Kondensat der Mischkondensator (30) gespeist wird.

7. Verfahren nach einem der vorhergehenden Ansprüche,
**dadurch gekennzeichnet,**
daß als Fest-Flüssig-Trennapparat ein Zyklon (42) und/oder eine Zentrifuge (46) verwendet wird.

8. Verfahren nach Anspruch 7,
**dadurch gekennzeichnet,**
daß als Zentrifuge (46) eine Schubzentrifuge (46) verwendet wird.

9. Verfahren nach einem der vorhergehenden Ansprüche,
**dadurch gekennzeichnet,**
daß zur Kühlung des aus dem Mischkondensator (30) austretenden Kondensats ein Wirbelschicht-Wärmeübertrager (38) verwendet wird.

10. Verfahren nach einem der vorhergehenden Ansprüche,
**dadurch gekennzeichnet,**
daß die in der Kolonne anfallende, von ammoniakhaltigen Bestandteilen weitgehend befreite Gülle eingedampft und getrocknet wird.

11. Verfahren nach einem der vorhergehenden Ansprüche,
**dadurch gekennzeichnet,**
daß die Gülle vor ihrer Zuführung zur Kolonne (10) in wenigstens einer Stufe (4) unter Abführung von Methan fermentiert wird.

## Claims

1. A process for the treatment of liquid manure, wherein fermented liquid manure is substantially freed of ammonia-containing constituents and CO₂ in a column (10) and ammonium salts are obtained, characterised in that water vapour leaving the column (10) and containing ammonia-containing constituents and CO₂ is condensed in a direct-contact condenser (30) to form ammonium salts in the condensate and then the ammonium salts are separated from the condensate in a solid-liquid separation apparatus, and in that the column is fed with a proportion of the condensate leaving the direct-contact condenser (30).

2. A process according to Claim 1, characterised in that the direct-contact condenser (30) is fed with the condensate being formed in the solid-liquid separation apparatus and which is substantially freed of solid ammonium salts.

3. A process according to Claim 1 or 2, characterised in that on its way from the direct-contact condenser (30) to the solid-liquid separation apparatus the condensate is cooled down to a temperature below the saturation temperature of the condensate.

4. A process according to Claim 1 or 2, characterised in that condensate leaving the direct-contact condenser (30) is cooled down to a temperature above the saturation temperature of the condensate and is then cooled, for precipitation of ammonium salts in a crystalliser (60) down to a temperature below the saturation temperature of the condensate, before it enters the solid-liquid separation apparatus.

5. A process according to Claim 4, characterised in that the direct-contact condenser (30) is fed with a proportion of the condensate which has been cooled to above its saturation temperature.

6. A process according to Claim 4 or 5, characterised in that the direct-contact condenser (30) is fed with the condensate being formed in the crystalliser (60) and which is substantially freed of ammonium salts.

7. A process according to any one of the preceding Claims, characterised in that a cyclone (42) and/or a centrifuge (46) is used as the solid-liquid separation apparatus.

8. A process according to Claim 7, characterised in that a thrust centrifuge (46) is used as the centrifuge (46).

9. A process according to any one of the preceding Claims, characterised in that a fluidised-bed heat carrier is used to cool the condensate leaving the direct-contact condenser (30).

10. A process according to any one of the preceding Claims, characterised in that the liquid manure, which is being formed in the column and substantially freed of ammonia-containing constituents, is evaporated and dried.

11. A process according to any one of the preceding Claims, characterised in that before being fed to the column (10) the liquid manure is fermented in at least one stage (4) and methane is discharged.

## Revendications

1. Procédé de traitement de lisier, dans lequel du lisier fermenté est amplement débarrassé, dans une colonne (10), de CO₂ et de composants chargés d'ammoniac, et des sels d'ammonium sont extraits,
caractérisé par le fait
que de la vapeur d'eau sortant de la colonne (10), renfermant du CO₂ et des composants chargés d'ammoniac, est condensée dans un condenseur mélangeur (30) avec formation de sels d'ammonium dans le condensat, après quoi les sels d'ammonium sont séparés d'avec le condensat dans un séparateur solides-liquides ; et par le fait que la colonne (10) est alimentée par une partie du condensat sortant du condenseur mélangeur (30).

2. Procédé selon la revendication 1,
caractérisé par le fait
que le condenseur mélangeur (30) est alimenté par le condensat présent dans le séparateur solides-liquides et débarrassé, pour l'essentiel, de sels d'ammonium solides.

3. Procédé selon la revendication 1 ou 2,
caractérisé par le fait
que, sur son trajet du condenseur mélangeur (30) au séparateur solides-liquides, le condensat est refroidi jusqu'à une température située en deçà de la température de saturation dudit condensat, en vue de la précipitation de sels d'ammonium.

4. Procédé selon la revendication 1 ou 2,
caractérisé par le fait
que du condensat sortant du condenseur mélangeur (30) est refroidi jusqu'à une température située au-delà de la température de saturation dudit condensat, puis est refroidi jusqu'à une température située en deçà de la température de saturation dudit condensat, avant qu'il parvienne dans le séparateur solides-liquides, en vue de la précipitation de sels d'ammonium dans un cristallisoir (60).

5. Procédé selon la revendication 4,
caractérisé par le fait
que le condenseur mélangeur (30) est alimenté par une partie du condensat refroidi jusqu'au-delà de sa température de saturation.

6. Procédé selon la revendication 4 ou 5,
caractérisé par le fait
que le condenseur mélangeur (30) est alimenté par le condensat présent dans le cristallisoir (60) et amplement débarrassé de sels d'ammonium.

7. Procédé selon l'une des revendications précédentes,
caractérisé par le fait
qu'un cyclone (42) et/ou une centrifugeuse (46) est utilisé(e) en tant que séparateur solides-liquides.

8. Procédé selon la revendication 7,
caractérisé par le fait
qu'une centrifugeuse (46) à effet de cisaillement est utilisée en tant que centrifugeuse (46).

9. Procédé selon l'une des revendications précédentes,
caractérisé par le fait
qu'un échangeur thermique (38) à lit fluidisé est utilisé pour refroidir le condensat sortant du condenseur mélangeur (30).

10. Procédé selon l'une des revendications précédentes,
caractérisé par le fait
que le lisier présent dans la colonne, amplement débarrassé de composants chargés d'ammoniac, est concentré par évaporation et séché.

11. Procédé selon l'une des revendications précédentes,
caractérisé par le fait
que, préalablement à sa délivrance à la colonne (10), le lisier est fermenté dans au moins un étage (4), avec évacuation de méthane.
